# EUROPÄISCHE PATENTSCHRIFT

(11) **EP 0 873 283 B1**
(45) Veröffentlichungstag und Bekanntmachung des Hinweises auf die Patenterteilung: **21.06.2000**
(21) Anmeldenummer: 97914070.4
(22) Anmeldetag: 09.01.1997
(51) Int. Cl.: C04B 28/02, C04B 28/26, C04B 38/02, C09K 21/02, C09K 21/06

(54) **BRANDSCHUTZSCHAUMMASSE**
FIRE PROOFING FOAM COMPOUND
MOUSSE ANTI-FEU

(30) Priorität: 12.01.1996 DE 29600466 U; 14.09.1996 DE 29616052 U
(43) Veröffentlichungstag der Anmeldung: 28.10.1998
(73) Patentinhaber: Krafft, Alfred-Peter, 83209 Prien (DE)
(72) Erfinder: Krafft, Alfred-Peter, 83209 Prien (DE)
(86) Internationale Anmeldenummer: DE9700087
(87) Internationale Veröffentlichungsnummer: WO9725291

(56) Entgegenhaltungen:
- EP-A- 0 542 022
- EP-A- 0 688 852
- WO-A-92/10440
- WO-A-93/21126
- DE-A- 3 246 619
- DE-A- 4 308 688
- DE-U- 29 616 052
- US-A- 5 244 726
- CHEMICAL ABSTRACTS, vol. 93, no. 2, 14.Juli 1980 Columbus, Ohio, US; abstract no. 12403s, XP000063942 & JP 54 154 424 A (K.MORISHITA)

## Beschreibung

Die vorliegende Erfindung betrifft eine aus mehreren pastösen Komponenten bestehende Zusammenstellung zur Herstellung eines anorganischen, festen Schaumproduktes zur Anwendung im vorbeugenden baulichen Brandschutz, welche mittels eines Kartuschenauspreßgerätes unmittelbar in einen Wand- oder Deckendurchbruch eingebracht werden kann, dort vollständig aufschäumt und aushärtet.

Die Erfindung hat ferner das vollständig aufgeschäumte und ausgehärtete Schaumprodukt, welches durch die vollständige Aufschäumung und Aushärtung der pastösen Schaummasse erhältlich ist, zum Gegenstand.

Aus dem Stand der Technik sind anorganische, fließfähige Formmassen bekannt, die zur Herstellung von Formkörpern in horizontal ausgerichtete Formen gegossen werden und darin aushärten.

Diese Formmassen sind relativ dünnflüssig, um eine gleichmäßige Verteilung in der Form zu gewährleisten.

Die Dünnflüssigkeit führt zu dem Nachteil, daß derartige Formmassen nicht zum Verfüllen von Wand- oder Deckendurchbrüchen geeignet sind. Denn sie verbleiben nicht in solchen Öffnungen, sondern fließen der Schwerkraft gehorchend ungewollt aus diesen heraus. Insbesondere bei Über-Kopf-Arbeiten macht sich dieser Effekt nachteilig bemerkbar.
Auch zum Beschichten von Stahl- und Holzkonstruktionen und dergleichen sind diese Formmassen aufgrund ihrer Dünnflüssigkeit ungeeignet.

Die erforderlichen Komponenten derartiger Formmassen werden als Einzelkomponenten in teuren und aufwendigen Bau-Mischsystemen meist unter Beanspruchung einer Versorgung mit Elektrizität am Einsatzort gemischt.

Solche Formmassen weisen daher den Nachteil auf, daß ihre Anwendung mit hohen Kosten verbunden, zeitraubend und aufwendig ist und deshalb auf wenige Großprojekte beschränkt ist.

Außerdem sind Fehler beim Zusammengeben der einzelnen Komponenten am Einsatzort denkbar, die zu einer verminderten Belastbarkeit des fertigen Formkörpers und - im Falle einer Beflammung des geschwächten Formkörpers - zu verheerenden Folgen führen können.

Nach dem Aushärten weist die Formmasse in der Regel die Gestalt einer großflächigen Platte auf.
Bei kleinflächigen Brandschutzabschottungen für Kabel oder kleine Rohre ergibt sich daher die Notwendigkeit, die großflächige Platte entsprechend den Abmessungen der zu verschließenden kleinen Öffnung paßgenau zuzuschneiden und in diese dichtend einzusetzen.
Dieser Vorgang ist zeitraubend, erfordert besonders ausgebildetes Personal und setzt zahlreiche Gerätschaften zur Bearbeitung der großformatigen Platte voraus.

Schließlich fällt ein erheblicher Ausschuß in Form des weggearbeiteten Materials an.

Derartige Form-Massen sind aus der DE-3246619 A1 und der WO-9210440 bekannt.
Die DE-3246619 A1 beschreibt eine schäumbare, wasserhaltige härtbare Form-Masse. Die dortige Form-Masse wird durch das Vermischen eines pulverförmigen, wasserfreien Oxydgemisches als Steinbildner mit einer Alkalisilikat-Lösung und einem pulverförmigen Schäummittel hergestellt.

Die WO-9210440 offenbart ein Verfahren zur Herstellung eines feinporigen, anorganischen Schaumes, bei dem zunächst eine steinbildende Komponente als Feststoff in Pulverform mit einem dünnflüssigen Tensid vermischt wird. Anschließend wird eine flüssige Härter-Komponente zugemischt. Zum Schluß wird ein fester oder flüssiger Schaumbildner zugesetzt.

Aufgabe der vorliegenden Erfindung ist daher die Bereitstellung einer Zusammenstellung von Komponenten zur Erstellung einer pastösen anorganischen Schaummasse und eines festen anorganischen Schaumproduktes, mit deren Hilfe insbesondere kleinere Wand- und Deckendurchbrüche, Lücken, Fugen und andere schlecht zugängliche Bereiche unter den festgelegten Bedingungen des vorbeugenden baulichen Brandschutzes schnell, hermetisch, ohne kostenintensive Anpassungsarbeiten und unter Vermeidung eines Ausschusses verfüllt werden können, die auch zum Beschichten von Stahl- und Holzkonstruktionen und dergleichen geeignet ist, deren Herstellung vor Ort keine aufwendigen Bau-Mischsysteme oder Mischsysteme mit zahlreichen Vorratskammern erfordert, sondern schnell, einfach, kostengünstig und unabhängig von einer Versorgung mit Elektrizität möglich ist und Fehlermöglichkeiten im Hinblick auf die Zusammensetzung der Schaummasse ausschließt.

Erfindungsgemäß wird diese Aufgabe gelöst durch die Bereitstellung einer Zusammenstellung nach Anspruch 1.

Die erfindungsgemäße Zusammenstellung von Komponenten umfaßt im wesentlichen eine pastöse anorganische, steinbildende Komponente (A) mit mindestens einem anorganischen Steinbildner. Vorzugsweise enthält die steinbildende Komponente (A) zusätzlich hierzu mindestens eine in einem PH-Wert-Bereich von 2-14 Gase freisetzende Verbindung.

Die erfindungsgemäße Zusammenstellung umfaßt ferner zum Aufschäumen und/oder Aushärten der steinbildenden Komponente (A) im sauren oder alkalischen Bereich weiterhin mindestens eine pastöse wasserhaltige Härter-Komponente (B) und gegebenenfalls mindestens eine pastöse Gase freisetzende Komponente (C).

Unter dem Begriff "Zusammenstellung" wird im Sinne der Erfindung die Summe beziehungsweise das räumliche Nebeneinander der noch nicht (vollständig) vermischten Komponente A und B sowie der gegebenenfalls vorhandenen Komponente C verstanden.

Erfindungsgemäß werden die einzelnen Komponenten A, B und C jeweils so formuliert, daß sie gerade noch fließfähig beziehungsweise pastös, lagerstabil und in bekannten Gebinden wie ein-, zwei-, drei- oder vierkammrigen Kunststoffkartuschen, Folienkartuschen, und Großkartuschen vorkonfektioniert sind und über ein rohrförmiges Statikmischsystem mittels bekannter Auspreßgeräte verarbeitet werden können.

Selbstverständlich ist es jedoch möglich, die Komponenten in Bulks vorzukonfektionieren und unmittelbar vor ihrem Einsatz in Großmischern miteinander zu vermischen. Diese Vorgehensweise empfiehlt sich insbesondere bei großflächigen Beschichtungsarbeiten an Holz- oder Stahlkonstruktionen sowie bei großflächigen Wand- und /oder Deckenaussparungen.

Dank der vorliegenden Erfindung können anorganische Schäume erstmals bei allen im Brandschutzbereich denkbaren Einsatzmöglichkeiten zur Anwendung kommen, insbesondere beim Verfüllen von kleineren Wand- oder Deckendurchbrüchen.

Die anorganische, steinbildende Komponente (A) enthält zumindest einen oder mehrere Steinbildner, die ausgewählt sind aus der Gruppe feinteiliges, wenigstens teilweise amorphes Alumosilikat mit Gehalten von amorphem Siliziumdioxid und Aluminiumoxid, glasartige, amorphe Elektrofilterasche, Elektrofilterasche aus Braunkohlekraftwerken, gemahlener, kalzinierter Bauxit, Basaltmehl, ungelöstes, amorphes SiO₂, insbesondere aus einer amorphen, dispers-pulverförmigen, entwässerten oder wasserhaltigen Kieselsäure oder aus Hochtemperaturprozessen (Silica Fume), Metakaolin, Quarzmehl, Magnesiumsilikate (Talkum, Speckstein), Glimmer, Perlit, Korund, Flugasche, Kaolin, Zeolith, Tonerde, Nakrit, Dickit, Granate, Orthoklas, Mikroklin, Plagioklas, Muskovit, Rhylith, Calciumsilicate, Calciumaluminate, Calciumferrite sowie Mischungen aus CaO mit SiO₂, Al₂O₃ und Fe₂O₃ in unterschiedlichen Mengenverhältnissen, Zemente, Portlandzemente, Eisenportlandzemente, Hochofenzemente, Traßzemente, Portland-Ölschieferzemente, Traßhochofenzemente, Flugaschezemente, Phonolithzemente, Vulkanzemente, Sulfathüttenzemente, Tonerdezemente, Quellzemente, Tiefbohrzemente und Schnellzemente;
Erfindungsgemäß bevorzugte Steinbildner sind Zemente, Quarzmehl, Basaltmehl, Elektrofilterasche aus Braunkohlekraftwerken, Metakaolin, Perlit, Flugasche, Zeolith, Bauxit, Talkum, Glimmer, Speckstein, Granat, Dickit sowie Muskovit.

Herausragende Ergebnisse lassen sich mit den Steinbildnern Zemente, Bauxit, Talkum, Glimmer, Speckstein, Granat, Dickit sowie Muskovit erzielen.

Die Teilchengröße des erfindungsgemäß verwendeten Steinbildner liegt im Bereich von 1 bis 50C µm, vorzugsweise von 60 bis 400 µm, insbesondere von 80 bis 150 µm.

Um den Steinbildner in Form einer Paste handhaben zu können, kann er erfindungsgemäß in einem Trägerstoff suspendiert beziehungsweise aufgeschlämmt werden. Zu diesem Zweck kann die steinbildende, anorganische Komponente (A) zusätzlich mindestens einen gegenüber dem Steinbildner vorzugsweise inerten Trägerstoff für den oder die ausgewählten Steinbildner umfassen.

Vorzugsweise ist der mindestens eine inerte Trägerstoff ausgewählt aus der Gruppe polare Lösungsmittel, Hydroxy-Derivate von aliphatischen und alicyclischen, gesättigten und ungesättigten Kohlenwasserstoffen (Alkohole), ein- oder höherwertige Alkohole, Glykole, Diole, Triole, Polyole, primäre, sekundäre und tertiäre Alkohole, Methanol, Ethanol, Propanol, Butanol, Siloxane, Silane, Silicone, Öle, Mineralöle, synthetische Öle, pflanzliche Öle, tierische Öle, Terpentinöl, gesättigte oder ungesättigte aliphatische Kohlenwasserstoffe, gesättigte oder ungesättigte cyclische Kohlenwasserstoffe, alicyclische Kohlenwasserstoffe, aromatische Kohlenwasserstoffe oder Wasser. Gegebenenfalls enthält der Trägerstoff ein Frostschutzmittel.

Zur Verhinderung des Absitzens des Steinbildners in der Suspension sowie zur Herbeiführung und Verbesserung der pastösen Eigenschaft der Suspension beziehungsweise der Aufschlämmung, kann die steinbildende anorganische Komponente (A) weiterhin einen Gerüststoff umfassen. Dieser stellt Zwischenräume zur Einlagerung einer Suspension des Steinbildners in dem Trägerstoff bereit.

Bei dem Gerüststoff handelt es sich vorzugsweise um inerte, kleine und kugelförmige Körper. Besonders geeignet sind solche kugelförmigen Körper, deren Oberflächen möglichst keine Rauhigkeit besitzen und deren Raumformen der Geometrie einer Kugel exakt entsprechen.

Derartige Gerüststoffe sind besonders leicht gegeneinander verschiebbar und tragen hierdurch wesentlich dazu bei, daß der Fließwiderstand der steinbildenden Komponente (A) gering ist und daß diese mit geringem Auspreßdruck aus dem Gebinde, beispielsweise aus einer Kartusche oder Tube, ausgedrückt werden kann.

Die Teilchengröße des Gerüststoffes liegt im Bereich von 60 bis 700 µm, vorzugsweise von 80 bis 450 µm, insbesondere von 100 bis 300 µm.

Vorzugsweise ist der Gerüststoff im wesentlichen chemisch inert. Er sollte insbesondere gegenüber der gegebenenfalls in Komponente A enthaltenen Gase freisetzenden Verbindung inert sein.

Als Gerüststoffe geeignet sind insbesondere Glas- oder Hohlglaskugeln und/oder Elektrofilterasche und/oder Flugasche aus Steinkohlekraftwerken in Form von Aluminiumsilikat-Hohlkugeln mit einem Schmelzpunkt im Bereich von 1100 bis 1400 °C.

Selbstverständlich ist es möglich, jede der Komponenten (A), (B) und (C) voneinander getrennt, beispielsweise in einzelnen Tuben oder Kartuschenkammern, vorzusehen. Dies hat jedoch eine erhöhte Anzahl von Tuben oder Kartuschenkammern zur Folge.

Zur Reduktion der erforderlichen Anzahl von Tuben oder Kartuschenkammern können erfindungsgemäß der steinbildenden Komponente (A) beispielsweise bereits entweder die ansonsten in der Komponente (C) enthaltene Gase freisetzende Verbindung zugesetzt werden.

Als weiteren Bestandteil kann die steinbildende Komponente (A) daher mindestens eine Gase freisetzende Verbindung enthalten, welche in einem PH-Bereich von beispielsweise 2 bis 14, insbesondere im alkalischen oder sauren Bereich, eine Freisetzung von Gasen zur Schaumbildung ermöglicht. Dies kann beispielsweise der Fall sein beim Zusammentreffen mit der Härter-Komponente (B). Bei den freigesetzten Gasen kann es sich beispielsweise um O₂, Ammoniak (NH₃), Kohlendioxid oder Kohlenmonoxid handeln.

Die besondere Bedeutung der Gase freisetzenden Verbindung liegt auch darin, daß ihr die Funktion eines Keimbildners bei der Schaumerzeugung zukommt.

Grundsätzlich kann jede beliebige Verbindung, welche im PH-Bereich von 2 bis 14, insbesondere im alkalischen oder sauren Bereich, Gase freisetzt, im Rahmen der vorliegenden Erfindung als Gase freisetzende Verbindung Verwendung finden.
Die Gase freisetzende Verbindung ist vorzugsweise ausgewählt aus der Gruppe (NH₄)Cl, NH₄CH₃COO, (NH₄)₂CO₃, (NH₄)₃PO₄, (NH₄)₂SO₄, Peroxide, welche ausgewählt sind aus der Gruppe Natriumperoxid (Na₂O₂), Wasserstoffperoxid (H₂O₂), Natriumperborat (NaBO₃· 4 H₂O), Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃), Aluminium- und Magnesiumpulver.

Als Gase freisetzende Verbindungen sind erfindungsgemäß besonders bevorzugt NH₄Cl, Natriumperborat, Natriumperoxid, Aluminium- und Magnesiumpulver.

Die steinbildende Komponente (A) weist eine Viskosität im Bereich von 20 bis 150 Pa·s auf. Um die Viskosität der steinbildenden Komponente (A) auf einen in diesem Bereich liegenden Wert exakt einzustellen, kann sie nötigenfalls mindestens ein Verdickungsmittel enthalten.

Das Verdickungsmittel ist beispielsweise ausgewählt aus der Gruppe Bentonite, Zeolithe, inerte Füllstoffe, Phyllosilikate, Kieselsäuren, Kieselerden und inerte, insbesondere gegenüber Calciumhydroxid inerte, anorganische und organische Fasern.

100 Gewichtsteile der steinbildenden Komponente (A) enthalten den oben definierten Steinbildner in einem Bereich von 35 bis 90 Gew.-Teilen, vorzugsweise von 40 bis 75 Gew.-Teilen, insbesondere von 50 bis 60 Gew.-Teilen.

Falls eine Gase freisetzende Verbindung in der steinbildenden Komponente (A) vorhanden ist, ist sie vorzugsweise in einer solchen Menge darin enthalten, die zur Beeinflussung der Porenstruktur und/oder der Festigkeit der aufschäumenden oder aufgeschäumten Schaummasse ausreicht.

100 Gewichtsteile der steinbildenden Komponente (A) können den oben definierten Trägerstoff im Bereich von 10 bis 75 Gew.-Teilen, vorzugsweise von 15 bis 50 Gew.-Teilen, insbesondere von 20 bis 40 Gew.-Teilen enthalten.

100 Gewichtsteile der steinbildenden Komponente (A) können den oben definierten Gerüststoff im Bereich von 0 bis 55 Gew.-Teilen, vorzugsweise von 15 bis 40 Gew.-Teilen, insbesondere von 20 bis 30 Gew.-Teilen, enthalten.

100 Gewichtsteile der steinbildenden Komponente (A) können das oben definierte Verdickungsmittel im Bereich von 0 bis 20 Gew.-Teilen, vorzugsweise von 2 bis 18 Gew.-Teilen, insbesondere von 3 bis 15 Gew.-Teilen, enthalten.

Die Herstellung der Komponente (A) kann beispielsweise wie folgt in einem kesselförmigen Reaktionsgefäß erfolgen. Bei Raumtemperatur wird der Trägerstoff vorgelegt und unter Rühren gibt man den Gerüststoff, den Steinbildner und gegebenenfalls die Gase freisetzende Verbindung hinzu. Es wird solange gerührt, bis sämtliche in der Mischung enthaltenen Steinbildner benetzt sind. Anschließend kann ein Unterdruck ( etwa 100 mbar) angelegt und das Rühren für etwa 15 Minuten fortgesetzt werden, um Luftblasen aus der Mischung zu entfernen.
Man erhält die Komponente A in Form einer Aufschlämmung mit einer Viskosität im Bereich von 20 bis 150 Pa-s.

Die erfindungsgemäße Zusammenstellung enthält neben der pastösen steinbildenden Komponente (A) eine pastöse Härter-Komponente (B) zum Aushärten der erfindungsgemäßen Schaummasse.

Die Härter-Komponente (B) bewirktdie Härtungsreaktion der Steinbildner in der steinbildenden Komponente (A) insbesondere im alkalischen Bereich und führt zu einen kraftschlüssigen Zusammenhalt der Steinbildner in der steinbildenden Komponente (A).

Als mineralischer Leim für die miteinander zu verbindenden Steinbildner- und Gerüststoffteilchen der steinbildenden Komponente (A) kommen insbesondere Wassergläser zur Anwendung, die durch Zusatz eines handelsüblichen Stabilisators stabilisiert sein können. Zur Erhöhung der Viskosität der wäßrigen Wasserglaslösung auf einen Wert im erwünschten Bereich von 20 bis 150 Pa·s kann überschüssiges Wasser abgedampft werden.

Die Härter-Komponente (B) umfaßt beispielsweise Wasser oder eine gegebenenfalls eingeengte wässrige Alkalisilikatlösung mit 1,2 bis 2,5 Mol SiO₂ je Mol K₂O und/oder Na₂O und/oder eine wässrige Aluminiumsilikatlösung und/oder eine fließfähige Masse mit Gehalten von 1,5 bis 10 Gew.-Teilen Oxidgemisch mit Gehalten von amorphem SiO₂ und Aluminiumoxid und 0,7 bis 2,5 Gew.-Teilen K₂O beziehungsweise 0,55 bis 1,5 Gew.-Teilen Na₂O je 1 Gew. Teil gelöstes SiO₂.

100 Gew.-Teile der Härter-Komponente (B) umfassen beispielsweise 100 Gew.-Teile des oben definierten Trägerstoffs (beispielsweise Wasser) oder 50 bis 90 Gew.-Teile, vorzugsweise 55 bis 80 Gew.-Teil, insbesondere 60 bis 70 Gew.-Teile Alkalisilikatlösung, Aluminiumsilikatlösung oder einer fließfähigen Masse, welche ein Oxidgemisch aus SiO₂ und Aluminiumoxid sowie von K₂O oder Na₂O umfaßt, 0 bis 20 Gew.-Teile, vorzugsweise 5 bis 15 Gew.-Teile, insbesondere 7 bis 12 Gew.-Teile eines flüssigen und/oder festen Stabilisators, 10 bis 70 Gew.-Teile des oben definierten Trägerstoffs, 0 bis 70 Gew.-Teile des oben definierten Gerüststoffs und 0 bis 15 Gew.-Teile des oben definierten Verdickungsmittels.

Die erfindungsgemäße Schaummasse oder Zusammenstellung enthält 0,5 bis 5 Gew.-Teile der steinbildenden Komponente (A) je Gew.-Teil der Härter-Komponente (B).

Die Herstellung der Komponente (B) kann beispielsweise wie folgt in einem kesselförmigen Reaktionsgefäß erfolgen. Bei Raumtemperatur wird der Härter (zum Beispiel eine wässrige Alkalisilikatlösung) vorgelegt und unter Rühren gibt man den Gerüststoff und gegebenenfalls das Verdickungsmittel zu. Es wird zumindest solange gerührt, bis sämtliche in der Mischung enthaltenen Feststoffe benetzt sind. Anschließend kann ein Unterdruck ( etwa 100 mbar) angelegt und das Rühren für etwa 15 Minuten fortgesetzt werden, um Luftblasen aus der Mischung zu entfernen.
Man erhält die Komponente B in Form einer Aufschlämmung mit einer Viskosität im Bereich von 20 bis 150 Pa·s.

Die Zusammenstellung kann ferner mindestens eine pastöse, Gase freisetzende Komponente (C) umfassen.

Die mindestens eine Gase freisetzende Verbindung der Gase freisetzenden Komponente (C) ist beispielsweise ausgewählt aus der Gruppe (NH₄)Cl, NH₄CH₃COO, (NH₄)₂CO₃, (NH₄)₃PO₄, (NH₄)₂SO₄, Peroxide, welche ausgewählt sind aus der Gruppe Natriumperoxid (Na₂O₂), Wasserstoffperoxid (H₂O₂),
Natriumperborat (NaBO₃ · 4 H₂O), Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃), Aluminium- und Magnesiumpulver.
Die Gase freisetzende Verbindung ist in der Gase freisetzenden Komponente (C) in einer Menge enthalten, die zur Beeinflussung der Porenstruktur und/oder der Festigkeit der aufschäumenden oder aufgeschäumten Schaummasse ausreicht.

Erfindungsgemäß besonders bevorzugte Gase freisetzende Verbindungen sind Peroxide und Aluminium- oder Magnesiumpulver.

Die Gase freisetzende Komponente (C) kann neben der soeben näher definierten Gase freisetzenden Verbindung beispielsweise einen Trägerstoff umfassen, welcher gegebenenfalls weitgehend inert und ausgewählt ist aus der Gruppe Hydroxy-Derivate von aliphatischen und alicyclischen, gesättigten und ungesättigten Kohlenwasserstoffen (Alkohole), ein- oder höherwertige Alkohole, Glykole, Diole, Triole, Polyole, primäre, sekundäre und tertiäre Alkohole, Methanol, Ethanol, Propanol, Butanol, Siloxane, Silane, Silicone, Öle, Mineralöle, synthetische Öle, pflanzliche Öle, tierische Öle, Terpentinöl, gesättigte oder ungesättigte aliphatische Kohlenwasserstoffe, gesättigte oder ungesättigte cyclische Kohlenwasserstoffe, alicyclische Kohlenwasserstoffe, aromatische Kohlenwasserstoffe oder Wasser.

Ebenso kann die Gase freisetzende Komponente (C) einen Gerüststoff umfassen, welcher Zwischenräume zur Einlagerung einer Aufschlämmung der Steinbildner in dem Trägerstoff bereitstellt und ausgewählt ist aus der Gruppe kleine kugelförmige Körper aus zumindest gegenüber der jeweiligen Gase freisetzenden Verbindung und/oder der jeweiligen den PH-Wert verändernden Verbindung inertem Material und/oder Glas- oder Hohlglaskugeln und/oder Elektrofilterasche und/oder Flugasche aus Steinkohlekraftwerken in Form von Aluminiumsilikat-Hohlkugeln mit einem Schmelzpunkt im Bereich von 1100 bis 1400 °C

Zur Einstellung der Viskosität der Gase freisetzenden Komponente (C) auf einen Wert zwischen 20 und 150 Pa·s beziehungsweise zur Angleichung der Viskosität der Komponente (C) an die Viskositäten der anderen Komponenten kann die Komponente (C) zusätzlich mindestens ein Verdickungsmittel umfassen, welches ausgewählt ist aus der Gruppe Bentonite, Zeolithe, inerte Füllstoffe, Phyllosilikate, Kieselsäuren und Kieselerden und inerte, insbesondere gegenüber Calciumhydroxid inerte, anorganische und organische Fasern.

Bevorzugte Verdickungsmittel sind Kieselsäuren, Bentonite sowie anorganische und organische Fasern.

100 Gew.-Teile der Gase freisetzenden Komponente (C) enthalten die Gase freisetzende Verbindung in einer Menge von 0,5 bis 60 Gew.-Teilen, vorzugsweise von 1 bis 40 Gew.-Teilen, insbesondere von 8 bis 30 Gew.-Teilen, den Trägerstoff im Bereich von 20 bis 70 Gew.-Teilen, vorzugsweise von 25 bis 60 Gew.-Teilen, insbesondere von 30 bis 50 Gew.-Teilen, das Verdickungsmittel im Bereich von 0 bis 10 Gew.-Teilen, vorzugsweise von 0,5 bis 5 Gew.-Teilen, insbesondere von 1 bis 2 Gew.-Teilen und den Gerüststoff im Bereich von 0 bis 75 Gew.-Teilen, vorzugsweise von 10 bis 60 Gew.-Teilen, insbesondere von 30 bis 40 Gew.-Teilen.

Die Herstellung der Gase erzeugenden Komponente C erfolgt beispielsweise indem man in ein kesselförmiges Reaktionsgefäß den Gerüststoff, die Gase freisetzende Verbindung und das Verdickungsmittel gibt. Falls einer der vorgelegten Bestandteile in Substanz oder in wässriger Lösung oxidationsempfindlich ist, empfiehlt sich zur Erhöhung der Lagerbeständigkeit nun das Anlegen eines Vakuums (etwa 100 mbar) und eine anschließende Spülung mit einem Inertgas wie Stickstoff oder Argon. Das Anlegen eines Vakuums und das Spülen mit Stickstoff kann wiederholt werden. Man setzt dann das Trägermittel zu und rührt die Mischung nötigenfalls in einer Stickstoffatmosphäre. Man erhält so die Komponente C in Form einer pastösen Mischung mit einer Viskosität im Bereich von 20 bis 150 Pa·s.

Die erfindungsgemäße Zusammenstellung enthält 3 bis 15 Gew.-Teile, vorzugsweise 4 bis 9 Gew.-Teile, insbesondere 6 bis 8 Gew.-Teile, der steinbildenden Komponente (A) je Gew.-Teil der Gase freisetzenden Komponente (C).

Die Zusammenstellung enthält 0,2 bis 15 Gew.-Teile, vorzugsweise 0,5 bis 13 Gew.-Teile, insbesondere 1 bis 10 Gew.-Teile, der Härter-Komponente (B) je Gew.-Teil der Gase freisetzenden Komponente (C).

Erfindungsgemäß sind die Viskositäten aller vorhandenen Komponenten (A, B und gegebenenfalls C) so aufeinander abgestimmt, daß die zum Aufschäumen notwendige Durchmischung in einem Statikmischer erreicht werden kann. Die Viskositäten der Komponenten entsprechen einander im wesentlichen und liegen jeweils im Bereich von 20 bis 150 Pa·s, vorzugsweise von 25 bis 120 Pa·s, insbesondere von 30 bis 90 Pa·s.

Die Besonderheit des erfindungsgemäßen Verfahrens zur Herstellung einer pastösen Schaummasse sowie eines porösen, anorganischen festen Schaumproduktes liegt in der Verwendung einer oder mehrerer Gase freisetzenden Verbindungen in der steinbildenden Komponente (A) oder in der Gase freisetzenden Komponente (C), die ausgewählt sind aus der Gruppe (NH₄)Cl, NH₄CH₃COO, (NH₄)₂CO₃, (NH₄)₃PO₄, (NH₄)₂SO₄, Peroxide, welche ausgewählt sind aus der Gruppe Natriumperoxid (Na₂O₂), Wasserstoffperoxid (H₂O₂), Natriumperborat (NaBO₃ · 4 H₂O), Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃), Aluminium- und Magnesiumpulver.
Die Verwendung der die Gase freisetzenden Verbindung erfolgt im Rahmen des erfindungsgemäßen Verfahrens jeweils in einer zur Beeinflussung der Porenstruktur und/oder der Festigkeit ausreichenden Menge in einer Zusammensetzung, welche eine anorganische, steinbildende Komponente (A), eine Härter-Komponente (B) und gegebenenfalls eine Gase freisetzende Komponente (C) enthält.

Zum Vermischen der steinbildenden Komponente (A) und der Härterkomponente (B) und gegebenenfalls der Gase freisetzenden Komponente (C) empfiehlt sich beispielsweise folgendes Vorgehen:

Zunächst werden wie oben aufgezeigt die einzelnen Komponenten (A) und (B) und gegebenenfalls (C) hergestellt und nachfolgend in das jeweilige Gebinde abgefüllt.

In der Regel wird jede der Komponenten in eine separate Kartusche oder Tube eingebracht. Vorzugsweise ist es jedoch auch möglich, einzelne Komponenten miteinander vorzumischen und diese Mischung in eine Kartusche oder Tube einzufüllen. Beispielsweise können die steinbildende Komponente (A) und die Gase freisetzende Komponente (C) beziehungsweise die Härter-Komponente (B) und die Gase freisetzende Komponente (C) nach einem Mischvorgang jeweils gemeinsam in eine Kartusche oder Tube abgefüllt werden.

Unmittelbar vor der Anwendung werden die beispielsweise drei vorkonfektionierten Komponenten beispielsweise durch Verrühren mittels eines Spatels oder eines Großmischers miteinander gründlich vermischt. Nach kurzer Zeit beginnt die Schaummasse bereits vorsichtig aufzuschäumen und kann aufgrund ihres ausgezeichneten Haftvermögens sofort zur Verfüllung von Wand- oder Deckendurchbrüchen verwendet werden.

Erfindungsgemäß erfolgt die Vermischung der einzelnen Komponenten in einem am Gebindehals vorgesehenen, rohrförmigen Statikmischsystem mit zwei oder drei Kartuschenkammern, wobei sich jede Komponente vorzugsweise in einer eigenen Kartuschenkammer befindet. Schnell, punktgenau und unter Vermeidung jeglichen Ausschusses sowie jeglicher Fehlermöglichkeit im Hinblick auf die Zusammensetzung der erhaltenen pastösen Schaummasse kann auf diese Weise die Herstellung und Applikation der erfindungsgemäßen Schaummasse erfolgen.

Vorzugsweise sind die Kartuschenkammern in der Weise dimensioniert, daß die in diesen laufenden Kolben per Hand betätigt werden können. Die Vermischung der jeweiligen Komponenten erfolgt in diesem Falle unabhängig von einer Stromversorgung vor Ort. Der Anwendungsbereich solcher Kartuschensysteme ist folglich besonders breit.

Erfindungsgemäß werden im Falle der Verwendung eines Statikmischsystems zuerst die Komponenten A und B (Steinbildner und Härter) in einer Vormischstrecke am Gebindeaustritt gemischt oder bereits miteinander gemischt vorgelegt. Nachfolgend wird der Mischung der Komponenten (A) und (B) die Gase freisetzende Komponente (C) zugeführt.
Die an das Ende der Vormischstrecke anschließende rohrförmige Mischstrecke, welche von den miteinander zu mischenden Komponenten gleichzeitig passiert wird, ist vorzugsweise so lange, daß die Schaummasse bereits beim Austritt aus dem Statikmischer-Rohr eine zumindest etwas aufgeschäumte, pastöse und tropffreie Konsistenz aufweist. Insbesondere bei Überkopfarbeiten macht sich dies positiv bemerkbar. Die pastöse Schaummasse wird zum weiteren Aufschäumen und Aushärten in eine zu verschließende Öffnung oder in eine Form eingebracht.

Ein solches Statikmischsystem umfaßt beispielsweise drei zylinderförmige Kartuschen, die über ihre Seitenwände zumindest teilweise miteinander in Verbindung stehen und deren Längsachsen parallel zueinander verlaufen. Die Kartuschen der steinbildenden Komponente (A) und der Härter-Komponente (B) können in eine mit einer Mischwendel ausgestattete Vormischstrecke münden. Parallel zu dieser kann der Hals der Kartusche von Komponente (C) verlaufen. Die Mischung der Komponenten (A) und (B) kann nach der Passage der Vormischstrecke auf die aus dem parallel verlaufenden Kartuschenhals zugeführte Komponente (C) treffen und gemeinsam mit dieser in einem nachgeschalteten, auf den Kartuschenhals aufgesetzten, rohrförmigen Statikmischer mit Mischwendel einer intensiven Vermischung unterzogen werden. Die Länge dieses rohrförmigen Statikmischers wird so gewählt, daß die austretende Schaummasse bereits etwas aufschäumt.

Mit Hilfe des freien Endes des rohrförmigen Statikmischers kann die erfindungsgemäße Schaummasse punktgenau und in der gewünschten Menge ausgebracht werden, wobei es aufgrund der zumindest etwas erhöhten Viskosität und dem ausgezeichneten Anhaftungsvermögen der Schaummasse nicht zu deren Herauslaufen aus einem Wand- oder Deckendurchbruch kommt. Eine Materialverschwendung wird somit wirksam verhindert. Das aus dem Stand der Technik bekannte mühsame und zeitraubende Bearbeiten von größeren Platten zum Verschließen kleinerer Durchbrüche entfällt.

Nach dem Einbringen der erfindungsgemäßen Schaummasse in die zu verschließende Öffnung findet das abschließende Aufschäumen und die Härtungsreaktion statt. Bereits nach etwa 15 Minuten besitzt das Schaumprodukt eine Festigkeit, die eine Bearbeitung zum Beispiel mittels eines Spatels, einer Säge oder einer Kelle zuläßt. Die endgültige Festigkeit des fertigen Schaumproduktes wird in Abhängigkeit von der Umgebungstemperatur etwa 30 bis 45 Minuten nach dem Vermischen der Komponenten erreicht.

Die Zuführung der Komponenten hintereinander ist wichtig, um beim Austritt aus dem Statikmischer eine bereits etwas aufschäumende und weitgehend tropffreie Masse zu erhalten, die sofort auch an senkrechten Wänden oder bei Über-Kopf-Anwendungen eine Anhaftung an dem Untergrund sicherstellt.

Das nach dem oben beschriebenen Verfahren hergestellte, vollständig aufgeschäumte, ausgehärtete anorganische Schaumprodukt besitzt eine Dichte im Bereich von 40 bis 1000 kg/m³, vorzugsweise von 60 bis 700 kg/m³, insbesondere von 100 bis 500 kg/m³ , eine realtive Druckfestigkeit im Bereich von 0,2 bis 60 Nmm⁻² , vorzugsweise von 1 bis 45 Nmm⁻² , insbesondere von 5 bis 30 Nmm⁻² sowie einen mittleren Porendurchmesser im Bereich von 0,1 bis 10 mm, vorzugsweise von 0,5 bis 5 mm, insbesondere von 1 bis 2 mm.

Das Volumen des fertig aufgeschäumten und ausgehärteten Schaumproduktes steht zu dem Volumen der noch ungeschäumten pastösen Schaummasse, das heißt zu dem Volumen der ungeschäumten Mischung der Komponenten (A), (B) und (C), in einem Verhältnis im Bereich von 1,01 : 1 bis 10:1, vorzugsweise von 1,01 : 1 bis 6:1, insbesondere von 1,01 : 1 bis 3:1.

Ein weiterer besonderer Vorteil der erfindungsgemäßen, vollständig aufgeschäumten und ausgehärteten Schaumprodukte liegt darin, daß deren Feuerwiderstandsdauer gemäß der Norm DIN 4102 Teil 9 länger als 180 Minuten ist sowie darin, daß sie der Baustoffklasse A1 (Nichtbrennbare Baustoffe) nach der Norm DIN 4102 Teil 1 und den Feuerwiderstandsklassen S 180 (Kabelabschottungen) und R 120 (Rohrabschottungen) nach der Norm DIN 4102 Teil 11 angehören.

Das erfindungsgemäße, vollständig aufgeschäumte und ausgehärtete Schaumprodukt kann aufgrund seiner hervorragenden Wärmedämmeigenschaften als Brandschutzabschottung von Durchführungen in Decken und Wänden für Kabel aller Art sowie für kleine und große Rohre verwendet werden.

Selbstverständlich kann die nach dem erfindungsgemäßen Verfahren erhältliche, pastöse Schaummasse beziehungsweise das erfindungsgemäße voll aufgeschäumte und ausgehärtete Schaumprodukt auch zum Verfüllen von Brandschutzklassifizierten Baufugen in hervorragender Weise verwendet werden, sofern keine Bauteilbewegungen durch die Fuge aufgenommen werden müssen.

Auch in nicht-klassifizierten Brandschutzbereichen ist eine Verwendung der erfindungsgemäß erhältlichen pastösen Schaummasse und des erfindungsgemäßen ausgehärteten Schaumproduktes von Vorteil. Beispielsweise können alle Arten von Aussparungen in Decken und Wänden, bei denen es auf eine dichte, nicht brennbare Verfüllung ankommt, hiermit verschlossen werden.

Bedingt durch die große Porengröße des voll aufgeschäumten und ausgehärteten Schaumproduktes weist dieses eine ausgesprochen geringe Dichte auf. Aus diesem Grunde ist es für eine Verwendung im Flugzeug- oder Schiffsbau geradezu prädestiniert.

Eine Übersicht über die erfindungsgemäß besonders bevorzugten Zusammenstellungen der Komponenten (A), (B) und (C) in einem Kartuschensystem mit 2 beziehungsweise 3 Kammern ergibt sich aus der nachfolgenden **Tabelle 1.**

In der Tabelle 2 sind Beispiele für die in Tabelle 1 angeführten Fallunterscheidungen angeführt.

**Tabelle 1**

| Nr. | Kompon. A Steinbildend | Kompon. B Härtend | Kompo. C Gase frei. |
|---|---|---|---|
| 1 | GV | + | - |
| 3 | GV | + | + |

GV = **Gase freisetzende Verbindung** ausgewählt aus der Gruppe: (NH₄)Cl, NH₄CH₃COO, (NH₄)₂CO₃, (NH₄)₃PO₄, (NH₄)₂SO₄ ; Peroxide, welche ausgewählt sind aus der Gruppe Natriumperoxid (Na₂O₂), Wasserstoffperoxid (H₂O₂), Natriumperborat (NaBO₃ · 4 H₂O); Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃); Aluminium- und Magnesiumpulver;

**Tabelle 2**

| Nr. | Kompon. A Steinbildend | Kompon. B Härtend | Kompo. C Gase frei. |
|---|---|---|---|
| 1 | Flugasche Aluminium Wasser PH-Stabilisator | Wasserglas Talkum Bentone | - |
| 3 | Flugasche Na-perborat Wasser Bentone | Na-wassergl. Hohlglaskugeln Bentone | Ca(OH)₂ Hohlglaskugeln Wasser Bentone |
| 5 | Flugasche Wasser Bentone Lauge | Na-wassergl. Talkum Bentone | Aluminium Hohlglaskugeln Bentone |

### Herstellungsbeispiele für die Komponenten A, B, C und D

### 1) Herstellung der steinbildenden Komponente (A):

In einem kesselförmigen Reaktionsgefäß werden bei Raumtemperatur, bezogen auf 100 Gewichtsteile der Komponente A, 36 Gew.-Teile Wasser vorgelegt und unter Rühren 21 Gew.-Teile Hohlglaskugeln (Gerüststoff) mit einem Durchmesser von 300 µm und 45 Gew.-Teile Steinbildner zugegeben, wobei sich 100 Gewichtsteile des Feststoffes aus 22 Gew.-Teilen Granat, 20 Gew.-Teilen Zeolith, 38 Gew.-Teilen Muskovit und 20 Gew.-Teilen Dickit zusammensetzen.

Es wird solange gerührt, bis die Feststoffe benetzt sind. Anschließend wird ein Unterdruck (100 mbar) angelegt und das Rühren für etwa 15 Minuten fortgesetzt, um Luftblasen aus der Mischung zu entfernen. Man erhält die steinbildende Komponente A in Form einer Aufschlämmung, deren Viskosität etwa bei 100 Pa-s liegt.

### 2. Herstellung der Härter-Komponente (B):

Eine handelsübliche Wasserglaslösung mit 20 Gew.-Teilen Na₂O, 34 Gew.-Teilen SiO2 und 6 Gew.-Teilen eines handelsüblichen Stabilisators wird gegebenenfalls so lange eingeengt, bis sie etwa 40 Gew.-Teile Wasser, bezogen auf 100 Gewichtsteile der Komponente B, enthält und ihre Viskosität etwa 100 Pa·s beträgt.

### 3. Herstellung der Gase freisetzenden Komponente (C):

In ein kesselförmiges Reaktionsgefäß werden, bezogen auf 100 Gewichtsteile der Komponente C, 64 Gew.-Teile Hohlglaskugeln (Gerüststoff) mit einem Durchmesser von 300 µm, 30,5 Gew.-Teile Wasser (Trägerstoff) , 4 Gew.-Teile Aluminium (Gase freisetzende Verbindung) und 1,5 Gew.-Teile Bentonit (Verdickungsmittel) gegeben. Anschließend wird gerührt, bis die Feststoffe vollständig gelöst beziehungsweise benetzt sind.
Die Komponente C fällt als pastöse Mischung mit einer Viskosität von etwa 100 Pa·s an.

## Patentansprüche

1. Zusammenstellung von pastösen Komponenten zur Herstellung einer pastösen Schaummasse, welche nach vollständigem Aufschäumen und Aushärten ein anorganisches, poröses und festes Schaumprodukt bildet, dadurch gekennzeichnet, daß die Zusammenstellung jeweils in einer die Festigkeit und/oder die Porenstruktur beeinflussenden Menge umfaßt:
mindestens eine steinbildende Komponente A und mindestens eine Härterkomponente B und -falls in der steinbildenden Komponente A keine Gase freisetzende Verbindung enthalten ist- mindestens eine schaumbildende Komponente C, wobei die einzelnen Komponenten A, B und C vorkonfektioniert in einem oder mehreren Gebinden enthalten sind, welche eine Kunststoffkartusche, Folienkartusche, Großkartusche oder ein Bulk sind, wobei die Viskositäten der einzelnen Komponenten A bis C einander im wesentlichen entsprechen und im Bereich von 20 bis 150 Pa•s liegen, die Inhalte der einzelnen Gebinde mittels mindestens eines Statikmischers mit oder ohne Vorlaufstrecke miteinander vermischt werden, die aus dem Statikmischer austretende Schaummasse bereits eine tropffreie Konsistenz aufweist und zum Aufschäumen und Aushärten in eine Aussparung mit gegebenenfalls vertikaler Ausrichtung ohne Gefahr eines Ablaufens einbringbar ist.

2. Zusammenstellung nach Anspruch 1, dadurch gekennzeichnet, daß die steinbildende Komponente A mindestens eine steinbildende Verbindung umfaßt, welche ausgewählt ist aus der Gruppe feinteiliges, wenigstens teilweise amorphes Alumosilikat mit Gehalten von amorphem Siliziumdioxid und Aluminiumoxid, glasartige, amorphe Elektrofilterasche, Elektrofilterasche aus Braunkohlekraftwerken, gemahlener, kalzinierter Bauxit, Basaltmehl, ungelöstes, amorphes SiO₂, insbesondere aus einer amorphen, dispers-pulverförmigen, entwässerten oder wasserhaltigen Kieselsäure oder aus Hochtemperaturprozessen (Silica Fume), Metakaolin, Quarzmehl, Magnesiumsilikate (Talkum, Speckstein), Glimmer, Perlit, Korund, Flugasche, Kaolin, Zeolith, Tonerde, Nakrit, Dickit, Granate, Orthoklas, Mikroklin, Plagioklas, Muskovit, Rhylith, Calciumsilicate, Calciumaluminate, Calciumferrite sowie Mischungen aus CaO mit SiO₂, Al₂O₃ und Fe₂O₃ in unterschiedlichen Mengenverhältnissen, Zemente, Portlandzemente, Eisenportlandzemente, Hochofenzemente, Traßzemente, Portland-Ölschieferzemente, Traßhochofenzemente, Flugaschezemente, Phonolithzemente, Vulkanzemente, Sulfathüttenzemente, Tonerdezemente, Quellzemente, Tiefbohrzemente und Schnellzemente
sowie mindestens einen gegenüber der steinbildenden Verbindung inerten Trägerstoff als Anpastmittel für die festen Bestandteile der Komponente A, welcher ausgewählt ist aus der Gruppe Hydroxy-Derivate von aliphatischen und alicyclischen, gesättigten und ungesättigten Kohlenwasserstoffen (Alkohole), ein- oder höherwertige Alkohole, Glykole, Diole, Triole, Polyole, primäre, sekundäre und tertiäre Alkohole, Methanol, Ethanol, Propanol, Butanol, Siloxane, Silane, Silicone, Öle, Mineralöle, synthetische Öle, pflanzliche Öle, tierische Öle, Terpentinöl, gesättigte oder ungesättigte aliphatische Kohlenwasserstoffe, gesättigte oder ungesättigte cyclische Kohlenwasserstoffe, alicyclische Kohlenwasserstoffe, aromatische Kohlenwasserstoffe oder Wasser
und/oder mindestens ein Verdickungsmittel zur Angleichung und exakten Einstellung der Viskosität der Komponente A an die Viskositäten der Komponenten B und C, welches ausgewählt ist aus der Gruppe Bentonite, Zeolithe, inerte Füllstoffe, Phyllosilikate, Kieselsäuren und Kieselerden und inerte, insbesonder gegenüber Calciumhydroxid inerte, anorganische und organische Fasern
und/oder mindestens einen Gerüststoff zur Verhinderung des Absitzens des Steinbildners sowie als Fließverbesserer, welcher ausgewählt ist aus der Gruppe kleine kugelförmige Körper, Glas- oder Hohlglaskugeln und/oder Elektrofilterasche und/oder Flugasche aus Steinkohlekraftwerken in Form von Aluminiumsilikat-Hohlkugeln mit einem Schmelzpunkt im Bereich von 1100 bis 1400 °C
und/oder mindestens eine Gase freisetzende Verbindung, welche ausgewählt ist aus der Gruppe (NH₄)Cl, NH₄CH₃COO, (NH₄)₂CO₃, (NH₄)₃PO₄, (NH₄)₂SO₄, Peroxide, welche ausgewählt sind aus der Gruppe Natriumperoxid (Na₂O₂), Wasserstoffperoxid (H₂O₂), Natriumperborat (NaBO₃ · 4 H₂O), Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃), Aluminium- und Magnesiumpulver.

3. Zusammensstellung nach Anspruch 1 oder 2, dadurch gekennzeichnet, daß die Härter-Komponente B mindestens eine härtende Verbindung umfaßt, welche Wasser ist oder eine wässrige Alkalisilikatlösung mit 1,2 bis 2,5 Mol SiO2 je Mol K₂O und/oder Na₂O und/oder eine wässrige Aluminiumsilikatlösung und/oder eine fließfähige Masse mit Gehalten von 1,5 bis 10 Gew.-Teilen Oxidgemisch mit Gehalten von amorphem SiO₂ und Aluminiumoxid und 0,7 bis 2,5 Gew.-Teilen K₂O beziehungsweise 0,55 bis 1,5 Gew.-Teilen Na₂O je 1 Gew. Teil gelöstes SiO₂ und/oder NaOH und/oder KOH
und gegebenenfalls (i) mindestens einen Trägerstoff, welcher ausgewählt ist aus der Gruppe Hydroxy-Derivate von aliphatischen und alicyclischen, gesättigten und ungesättigten Kohlenwasserstoffen (Alkohole), ein- oder höherwertige Alkohole, Glykole, Diole, Triole, Polyole, primäre, sekundäre und tertiäre Alkohole, Methanol, Ethanol, Propanol, Butanol, Siloxane, Silane, Silicone, Öle, Mineralöle, synthetische Öle, pflanzliche Öle, tierische Öle, Terpentinöl, gesättigte oder ungesättigte aliphatische Kohlenwasserstoffe, gesättigte oder ungesättigte cyclische Kohlenwasserstoffe, alicyclische Kohlenwasserstoffe, aromatische Kohlenwasserstoffe oder Wasser
und/oder (ii) mindestens einen Gerüststoff, welcher ausgewält ist aus der Gruppe kleine kugelförmige Körper, Glas- oder Hohlglaskugeln und/oder Elektrofilterasche und/oder Flugasche aus Steinkohlekraftwerken in Form von Aluminiumsilikat-Hohlkugeln mit einem Schmelzpunkt im Bereich von 1100 bis 1400 °C
und/oder (iii) mindestens ein Verdickungsmittel, welches ausgewählt ist aus der Gruppe Bentonite, Zeolithe, inerte Füllstoffe, Phyllosilikate, Kieselsäuren und Kieselerden und inerte, insbesonder gegenüber Calciumhydroxid inerte, anorganische und organische Fasern.

4. Zusammenstellung nach einem der Ansprüche 1 bis 3, dadurch gekennzeichnet, daß die Gase freisetzende Komponente C mindestens eine Gase freisetzende Verbindung umfaßt, welche ausgewählt ist aus der Gruppe (NH₄)Cl, NH₄CH₃COO, (NH₄)₂CO₃, (NH₄)₃PO₄, (NH₄)₂SO₄, Peroxide, welche ausgewählt sind aus der Gruppe Natriumperoxid (Na₂O₂), Wasserstoffperoxid (H₂O₂), Natriumperborat (NaBO₃ · 4 H₂O), Salze der Kohlensäure (Carbonate), Alkalicarbonate, Erdalkalicarbonate, Soda, Pottasche, Kalk, Späte, Hydrogencarbonate, Natriumhydrogencarbonat (NaHCO₃), Aluminium- und Magnesiumpulver
und gegebenenfalls (i) mindestens einen Trägerstoff, welcher ausgewählt ist aus der Gruppe Hydroxy-Derivate von aliphatischen und alicyclischen, gesättigten und ungesättigten Kohlenwasserstoffen (Alkohole), ein- oder höherwertige Alkohole, Glykole, Diole, Triole, Polyole, primäre, sekundäre und tertiäre Alkohole, Methanol, Ethanol, Propanol, Butanol, Siloxane, Silane, Silicone, Öle, Mineralöle, synthetische Öle, pflanzliche Öle, tierische Öle, Terpentinöl, gesättigte oder ungesättigte aliphatische Kohlenwasserstoffe, gesättigte oder ungesättigte cyclische Kohlenwasserstoffe, alicyclische Kohlenwasserstoffe, aromatische Kohlenwasserstoffe oder Wasser
und/oder (ii) mindestens ein Verdickungsmittel, welches ausgewählt ist aus der Gruppe Bentonite, Zeolithe, inerte Füllstoffe, Phyllosilikate, Kieselsäuren und Kieselerden und inerte, insbesonder gegenüber Calciumhydroxid inerte, anorganische und organische Fasern
und/oder (iii) mindestens einen Gerüststoff, welcher ausgewählt ist aus der Gruppe kleine kugelförmige Körper, Glas- oder Hohlglaskugeln und/oder Elektrofilterasche und/oder Flugasche aus Steinkohlekraftwerken in Form von Aluminiumsilikat-Hohlkugeln mit einem Schmelzpunkt im Bereich von 1100 bis 1400 °C.

5. Zusammenstellung nach einem der Ansprüche 1 bis 4, dadurch gekennzeichnet, daß 100 Gewichtsteile der steinbildenden Komponente (A) 35 bis 90 Gew.-Teile Feststoff, dessen Teilchengröße im Bereich von 1 bis 500 µm liegt, 0 bis 20 Gew.-Teile der Gase freisetzenden Verbindung oder 10 bis 75 Gew.-Teile Trägerstoff, 0 bis 55 Gew.-Teile des inerten Gerüststoffes und 0 bis 20 Gew.-Teile des Verdickungsmittels enthalten.

6. Zusammenstellung nach einem der Ansprüche 1 bis 5, dadurch gekennzeichnet, daß 100 Gew.-Teile der Härter-Komponente (B) 100 Gew.-Teile Wasser umfassen oder 50 bis 90 Gew.-Teile Alkalisilikatlösung, Aluminiumsilikatlösung oder einer fließfähigen Masse, welche ein Oxidgemisch aus SiO₂ und Aluminiumoxid sowie von K₂O oder Na₂O umfaßt, 0 bis 20 Gew.-Teile eines flüssigen und/oder festen Stabilisators, 10 bis 70 Gew.-Teile Trägerstoff, 0 bis 70 Gew.-Teile Gerüststoff und 0 bis 15 Gew.-Teile Verdickungsmittel und/oder 0,5 bis 60 Gew.-Teile NaOH und/oder KOH enthalten.

7. Zusammenstellung nach einem der Ansprüche 1 bis 6, dadurch gekennzeichnet, daß 0,5 bis 5 Gew.-Teile der steinbildenden Komponente (A) je Gew.-Teil der Härter-Komponente (B) enthalten sind.

8. Zusammenstellung nach einem der Ansprüche 1 bis 7, dadurch gekennzeichnet, daß 100 Gew.-Teile der Gase freisetzenden Komponente (C) 0,5 bis 60 Gew.-Teile der Gase freisetzenden Verbindung, 20 bis 70 Gew.-Teile Trägerstoff, 0 bis 10 Gew.-Teile Verdickungsmittel und 0 bis 75 Gew.-Teile des inerten Gerüststoffes enthalten.

9. Zusammenstellung nach einem der Ansprüche 1 bis 8, dadurch gekennzeichnet, daß 3 bis 15 Gew.-Teile der steinbildenden Komponente (A) je Gew.-Teil der Gase freisetzenden Komponente (C) enthalten sind.

10. Verfahren unter Verwendung einer Zusammenstellung nach einem der Ansprüche 1 bis 9 zur Herstellung einer pastösen Schaummasse, welche zu einem porösen, festen Schaumprodukt aufschäumbar und aushärtbar ist, dadurch gekennzeichnet, daß es folgende Verfahrensschritte umfaßt:
a) Die vorstehend definierten Komponenten A und B sowie - falls die steindildende Komponente A keine Gase freisetzende Verbindung enthält- die Komponente C, werden jeweils auf eine Viskosität im Bereich von 20-150 Pa•s eingestellt und in einem oder mehreren Gebinden konfektioniert dem Endverbraucher zur Verfügung gestellt;
b) Erst am Einsatzort wird der Inhalt des oder der Gebinde unter Verwendung eines Statikmischers vermischt und in eine zu verfüllende, gegebenenfalls vertikal ausgerichtete Aussparung tropffrei und punktgenau eingebracht, um dort unter Verzicht auf eine Erwärmung von außen innerhalb weniger Minuten vollständig aufzuschäumen und vollständig auszuhärten.

11. Verfahren nach Anspruch 12, dadurch gekennzeichnet, daß die Komponenten A, B sowie -falls die steinbildende Komponente A keine Gase freisetzende Verbindung enthältdie Komponente C in einem Statikmischsystem mit zwei oder drei Kartuschenkammern miteinander vermischt werden, wobei die gemeinsame, rohrförmige Mischstrecke so lange ist, daß die Schaummasse bereits beim Austritt aus dem Statikmischer-Rohr eine zumindest etwas aufgeschäumte, pastöse und tropffreie Konsistenz aufweist und wobei diese Schaummasse zum weiteren Aufschäumen und Aushärten in eine zu verschließende, gegebenenfalls senkrecht ausgerichtete Aussparung eingebracht wird.

12. Verfahren nach einem der Ansprüche 10 oder 11, dadurch gekennzeichnet, daß zuerst die Komponenten (A) und (B) (Steinbildner und Härter) in einer Vormischstrecke des Statikmischers gemischt oder bereits miteinander gemischt vorgelegt werden und nachfolgend die Gase freisetzende Komponente (C) in einem Statikmischer zugeführt wird.

13. Poröses, festes anorganisches Schaumprodukt , dadurch gekennzeichnet, daß es erhältlich ist nach einem Verfahren gemäß der Ansprüche 10 bis 12, eine Dichte im Bereich von 40 bis 1000 kg/m³ aufweist, eine reältive Druckfestigkeit im Bereich von 0,2 bis 60 Nmm⁻² und einen mittleren Porendurchmesser im Bereich von 0,1 bis 10 mm besitzt, über eine Feuerwiderstandsdauer gemäß der DIN 4102 Teil 9 verfügt, die länger als 180 Minuten ist sowie der Baustoffklasse A1 nach DIN 4102 Teil 1 und den Feuerwiderstandsklassen S 180 und R 120 der Norm DIN 4102 Teil 11 zugehört, wobei das Verhältnis des Volumens des aufgeschäumten Schaumproduktes zu dem Volumen der ungeschäumten Mischung der jeweiligen Komponenten A, B und -falls die steinbildende Komponente A keine Gase freisetzende Verbindung enthält- der Komponente C im Bereich von 1,01:1 bis 10:1 liegt.

## Claims

1. A formulation of pasty components for preparation of a pasty foam compound which forms a porous and solid inorganic foam product after completely foaming and hardening, characterized in that the formulation comprises the following in amounts to influence the strength and/or pore structure:
at least one core-forming component (A) and at least one hardener component (B) and, if no gas-releasing compound is present in the core-forming component (A), at least one foaming component (C), wherein the individual components (A), (B) and (C) are prefabricated and are present in one or more drums, said drum being a plastic cartridge, a film cartridge, a large-scale cartridge or bulk, where the viscosities of the individual components (A) through (C) essentially correspond to one another and are in the range of 20 to 150 Pa·s, the contents of the individual drums are mixed together by means of a static mixer with or without a preliminary zone, the foam compound coming out of the static mixer already has a drip-free consistency, and this foam compound can be introduced into a recess, optionally with a vertical orientation, for foaming and curing without any risk of it running out.

2. A formulation according to Claim 1, characterized in that the core-forming component (A) comprises at least one core-forming compound, which is selected from the group of finely divided, at least partially amorphous aluminosilicate containing amorphous silicon dioxide and aluminum oxide, vitreous, amorphous electrostatic filter ash, electrostatic filter ash from brown coal fired power plants, ground, calcined bauxite, powdered basalt, undissolved amorphous SiO₂, especially from an amorphous, dispersely powdered, hydrated or dehydrated silicic acid or from high-temperature processes (silica fume), metakaolin, powdered quartz, magnesium silicates (talc, soapstone), mica, perlite, corundum, flue ash, kaolin, zeolite, alumina, nacrite, dickite, granite, orthoclase, microcline, plagioclase, muscovite, rhyolite, calcium silicates, calcium aluminates, calcium ferrites and mixtures of CaO with SiO₂, Al₂O₃ and Fe₂O₃ in different quantity ratios, cements, Portland cements, iron Portland cements, blast furnace slag cements, trass cements, Portland oil shale cements, trass blast furnace cements, flue ash cements, phonolite cements, vulcan cements, sulfate slag cements, alumina cements, expanding cements, deep well cements and quick-curing cements;
and at least one carrier substance that is inert with respect to the core-forming compound as a pasting agent for the solid ingredients of component (A), selected from the group of hydroxyl derivatives of aliphatic and alicyclic, saturated and unsaturated hydrocarbons (alcohols), monohydric or higher alcohols, glycols, diols, triols, polyols, primary, secondary and tertiary alcohols, methanol, ethanol, propanol, butanol, siloxanes, silanes, silicones, oils, mineral oils, synthetic oils, vegetable oils, animal oils, turpentine oil, saturated or unsaturated aliphatic hydrocarbons, saturated or unsaturated cyclic hydrocarbons, alicyclic hydrocarbons, aromatic hydrocarbons or water;
and/or at least one thickener for adjusting and accurately setting the viscosity of the component (A) to-the viscosities of components (B) and (C), which is selected from the group of bentonites, zeolites, inert fillers, phyllosilicates, silicic acids and silicas and inert organic and inorganic fibers, especially that are inert with respect to calcium hydroxide;
and/or at least one builder for preventing the core-forming substance from sedimenting and as a flow-improving agent, which is selected from the group of small spherical bodies, glass beads or hollow glass beads and/or electrostatic filter ash and/or flue ash from coal fired power plants in the form of hollow aluminum silicate beads with a melting point in the range of 1100°C to 1400°C;
and/or at least one gas-releasing compound which is selected from the group consisting of (NH₄)Cl, NH₄CH₃COO, (NH₄)₂CO₃, (NH₄)₃PO₄, (NH₄)₂SO₄, peroxides selected from the group consisting of sodium peroxide (Na₂O₂), hydrogen peroxide (H₂O₂), sodium perborate (NaBO₃ · 4H₂O), salts of carbonic acid (carbonates), alkali carbonates, alkaline earth carbonates, sodium carbonate, potash, lime, spar, hydrogen carbonates (bicarbonates), sodium bicarbonate (NaHCO₃), powdered aluminum and magnesium.

3. A formulation according to Claim 1 or 2, characterized in that the hardener component (B) comprises at least one hardener compound which is water or an aqueous alkali silicate solution with 1.2 to 2.5 mol SiO₂ per mol K₂O and/or Na₂O and/or an aqueous aluminum silicate solution and/or a free-flowing compound containing 1.5 to 10 parts by weight oxide mixture containing amorphous SiO₂ and aluminum oxide and 0.7 to 2.5 parts by weight K₂O and/or 0.55 to 1.5 parts by weight Na₂O per part by weight dissolved SiO₂ and/or NaOH and/or KOH;
and optionally (i) at least one carrier substance, selected from the group of hydroxyl derivatives of aliphatic and alicyclic, saturated and unsaturated hydrocarbons (alcohols), monohydric or higher alcohols, glycols, diols, triols, polyols, primary, secondary and tertiary alcohols, methanol, ethanol, propanol, butanol, siloxanes, silanes, silicones, oils, mineral oils, synthetic oils, vegetable oils, animal oils, turpentine oil, saturated or unsaturated aliphatic hydrocarbons, saturated or unsaturated cyclic hydrocarbons, alicyclic hydrocarbons, aromatic hydrocarbons or water;
and/or (ii) at least one builder which is selected from the group of small spherical bodies, glass beads or hollow glass beads and/or electrostatic filter ash and/or flue ash from coal fired power plants in the form of hollow aluminum silicate beads with a melting point in the range of 1100°C to 1400°C;
and/or (iii) at least one thickener which is selected from the group of bentonites, zeolites, inert fillers, phyllosilicates, silicic acids and silicas and inert organic and inorganic fibers, especially inert with respect to calcium hydroxide.

4. A formulation according to one of Claims 1 through 3, characterized in that the gas-releasing component (C) comprises at least one gas-releasing compound selected from the group consisting of (NH₄)Cl, NH₄CH₃COO, (NH₄)₂CO₃, (NH₄)₃PO₄, (NH₄)₂SO₄, peroxides selected from the group consisting of sodium peroxide (Na₂O₂), hydrogen peroxide (H₂O₂), sodium perborate (NaBO₃ · 4H₂O), salts of carbonic acid (carbonates), alkali carbonates, alkaline earth carbonates, sodium carbonate, potash, lime, spar, hydrogen carbonates (bicarbonates), sodium bicarbonate (NaHCO₃), powdered aluminum and magnesium;
and optionally (i) at least one carrier substance, which is selected from the group of hydroxyl derivatives of aliphatic and alicyclic, saturated and unsaturated hydrocarbons (alcohols), monohydric or higher alcohols, glycols, diols, triols, polyols, primary, secondary and tertiary alcohols, methanol, ethanol, propanol, butanol, siloxanes, silanes, silicones, oils, mineral oils, synthetic oils, vegetable oils, animal oils, turpentine oil, saturated or unsaturated aliphatic hydrocarbons, saturated or unsaturated cyclic hydrocarbons, alicyclic hydrocarbons, aromatic hydrocarbons or water;
and/or (ii) at least one thickener which is selected from the group of bentonites, zeolites, inert fillers, phyllosilicates, silicic acids and silicas and inert organic and inorganic fibers, especially those that are inert with respect to calcium hydroxide;
and/or (iii) at least one builder which is selected from the group of small spherical bodies, glass beads or hollow glass beads and/or electrostatic filter ash and/or flue ash from coal fired power plants in the form of hollow aluminum silicate beads with a melting point in the range of 1100°C to 1400°C.

5. A formulation according to one of Claims 1 through 4, characterized in that 100 parts by weight of the core-forming component (A) contain 35 to 90 parts by weight solids whose particle size is in the range of 1 to 500 µm, 0 to 20 parts by weight of the gas-releasing compound or 10 to 75 parts by weight of the carrier substance, 0 to 55 parts by weight of the inert builder substance and 0 to 20 parts by weight thickener.

6. A formulation according to one of Claims 1 through 5, characterized in that 100 parts by weight of the hardener component (B) comprise 100 parts by weight water or 50 to 90 parts by weight alkali silicate solution, aluminum silicate solution or a free-flowing compound which contains an oxide mixture of SiO₂ and aluminum oxide and K₂O or Na₂O, 0 to 20 parts by weight of a liquid and/or solid stabilizer, 10 to 70 parts by weight of a carrier substance, 0 to 70 parts by weight of a builder substance and 0 to 15 parts by weight thickener and/or 0.5 to 60 parts by weight NaOH and/or KOH.

7. A formulation according to one of Claims 1 through 6, characterized in that 0.5 to 5 parts by weight of the core-forming component (A) are present per part by weight of the hardener component (B).

8. A formulation according to one of Claims 1 through 7, characterized in that 100 parts by weight of the gas-releasing component (C) contain 0.5 to 60 parts by weight of the gas-releasing compound, 20 to 70 parts by weight of the carrier substance, 0 to 10 parts by weight thickener, and 0 to 75 parts by weight inert builder.

9. A formulation according to one of Claims 1 through 8, characterized in that 3 to 15 parts by weight of the core-forming component (A) are present per part by weight of the gas-releasing component (C).

10. A method using a formulation according to one of Claims 1 through 9 for producing a pasty foam compound which can be foamed and cured to form a porous solid foam product, characterized in that it comprises the following process steps:
a) components (A) and (B) defined above plus, if the core-forming component (A) does not contain any gas-releasing compound, component (C) are each adjusted to a viscosity in the range of 20 to 150 Pa·s and are packaged in one or more drums to be made available to the final consumer;
b) only at the use site are the contents of the drum(s) mixed using a static mixer and introduced into a recess to be filled, optionally vertically oriented, in a drip-free and accurate manner, where they foam up completely within a few minutes without requiring external heating and they harden completely.

11. A method according to Claim 12, characterized in that components (A), (B) and, if the core-forming component (A) does not contain a gas-releasing compound, component (C) are mixed together in a static mixing system having two or three cartridge compartments, where the common tubular mixing zone is long enough for the foam compound to have an at least slightly foamed, pasty and drip-free consistency as soon as it leaves the static mixing tube, and this foam compound is introduced into a recess to be filled, optionally arranged vertically, for further foaming.

12. A method according to one of Claims 10 or 11, characterized in that first components (A) and (B) (core-forming substance and hardener) are mixed in a premixing zone of the static mixer or they are already mixed together from the beginning, and then the gas-releasing component (C) is added in a static mixer.

13. A porous, solid, inorganic foam product, characterized in that it is obtainable by a method according to Claims 10 through 12, has a density in the range of 40 to 1000 kg/m³, a relative compressive strength in the range of 0.2 to 60 N/mm² and an average pore diameter in the range of 0.1 to 10 mm, has a fire resistance time according to DIN 4102, part 9, which is longer than 180 minutes, and it belongs to construction materials class A1 according to DIN 4102, part 1 and to fire resistance classes S180 and R120 according to DIN 4102, part 11, where the ratio of the volume of the foam product after foaming to the volume of the unfoamed mixture of the respective components (A), (B) and, if the core-forming component (A) does not contain a gas-releasing compound, (C) in the range of 1:1 to 10:1.

## Revendications

1. Combinaison de constituants pâteux pour la fabrication d'un mélange mousseux pâteux, lequel forme un produit expansé solide, poreux et inorganique après avoir été soumis à un moussage et durcissement complets, caractérisée en ce qu'elle comprend dans une quantité respective influant sur la résistance et/ou la structure des pores:
au moins un constituant A pétrifiant et au moins un constituant B durcisseur et - dans la mesure où le composant A pétrifiant ne comprend pas de composé dégageant des gaz -- au moins un constituant C moussant, chaque constituant A, B et C étant contenu sous forme préconditionnée dans un ou plusieurs conteneurs, lesquels sont des cartouches en matière plastique, des cartouches en film, des cartouches de grande dimension ou des fûts, les viscosités respectives des constituants A à C étant sensiblement équivalentes et comprises entre 20 et 150 Pa.s, les contenus des conteneurs sont mélangés les uns avec les autres au moyen d'au moins un mélangeur statique avec ou sans section de prémélange, le mélange mousseux sortant du mélangeur statique présente une consistance qui ne goutte pas et peut être introduit sans risque de coulure dans un évidement d'orientation le cas échéant verticale, ce à des fins de moussage et de durcissement.

2. Combinaison selon la revendication 1 caractérisée en ce que le constituant A pétrifiant comprend au moins un composé pétrifiant choisi dans le groupe du silicate alumineux à fines particules et au moins partiellement amorphe avec des teneurs en dioxyde de silicium et d'oxyde d'aluminium, des cendres d'électrofiltre vitreuses et amorphes, cendres d'électrofiltre provenant de centrales thermiques au lignite, bauxite broyée et calcinée, farine de basalte, SiO₂ amorphe et en suspension, provenant notamment d'un acide silicique amorphe, pulvérulent en dispersion, déshydraté ou contenant de l'eau ou issu de processus à haute température (silica fume), métakaolin, poudre de quartz, silicates de magnésium (talc, stéatite), mica, perlite, corindon, cendres volantes, kaolin, zéolithe, alumine, nacrite, dickite, grenats, orthose, microcline, plagioclase, muscovite, rhyolite, silicates de calcium, aluminates de calcium, ferrites de calcium ainsi que mélanges de CaO avec du SiO₂, Al₂O₃ et Fe₂O₃ dans des rapports volumétriques différents, ciments, ciments de Portland, ciments de laitier de Portland, ciments de haut fourneau, ciments au trass, ciments de Portland aux schistes bitumineux, ciments de haut fourneau à trass, ciments aux cendres volantes, ciments au phonolithe, ciments volcaniques, ciments de haut fourneau à sulfate, ciments alumineux, ciments expansifs, ciments pour puits profonds et ciments rapides
ainsi qu'au moins un support inerte par rapport au composé pétrifiant et servant d'agent de formation de pâte pour les éléments solides du constituant A, lequel est choisi dans le groupe des dérivés hydroxy des hydrocarbures aliphatiques et alicycliques, saturés et insaturés (alcools), alcools monovalents ou de valence supérieure, glycols, diols, triols, polyols, alcools primaires, secondaires et tertiaires, méthanol, éthanol, propanol, butanol, siloxanes, silanes, silicones, huiles, huiles minérales, huiles synthétiques, huiles végétales, huiles animales, huile de térébenthine, hydrocarbures aliphatiques saturés ou insaturés, hydrocarbures cycliques saturés ou insaturés, hydrocarbures alicycliques, hydrocarbures aromatiques ou eau
et/ou au moins un épaississant destiné à l'adaptation et à l'ajustage exact de la viscosité du constituant A par rapport aux viscosités des constituants B et C, lequel est choisi dans le groupe des bentonites, zéolithes, charges inertes, phyllosilicates, acides siliciques et silices ainsi que fibres inorganiques et organiques inertes, notamment par rapport à l'hydroxyde de calcium
et/ou au moins une matière d'ossature destinée à empêcher la sédimentation du pétrifiant et à renforcer la fluidité, laquelle est choisie dans le groupe des petits corps sphériques, sphères de verre ou sphères creuses en verre et/ou cendres d'électrofiltre et/ou cendres volantes provenant de centrales thermiques au lignite sous forme de sphères creuses de silicate d'aluminium présentant un point de fusion compris entre 1100 °C et 1400 °C
et/ou au moins un composé dégageant des gaz, lequel est choisi dans le groupe (NH₄)Cl, NH₄CH₃COO, (NH₄)₂CO₃, (NH₄)₃PO₄, (NH₄)₂SO₄, peroxydes, lesquels sont choisis parmi le groupe du bioxyde de sodium (Na₂O₂), peroxyde d'hydrogène (H₂O₂), perborate de sodium (NaBO₃·4 H₂O), sels du dioxyde de carbone (carbonates), carbonates alcalins, carbonates alcalino-terreux, soude, potasse, chaux, spaths, hydrogénocarbonates, hydrogénocarbonates de sodium (NaHCO₃), poudre fine d'aluminium et de magnésium.

3. Combinaison selon la revendication 1 ou 2 caractérisée en ce que le constituant B durcisseur comprend au moins un composé durcissant, lequel est de l'eau ou du silicate alcalin en solution aqueuse avec 1,2 à 2,5 moles de SiO₂ par mole de K₂O et/ou de Na₂O et/ou du silicate d'aluminium en solution aqueuse et/ou un mélange fluide avec des teneurs comprises entre 1,5 et 10 parties en poids d'un mélange d'oxyde avec des teneurs en SiO₂ amorphe et oxyde d'aluminium et 0,7 à 2,5 parties en poids de K₂O ou 0,55 à 1,5 parties en poids de Na₂O par partie en poids de SiOz dissous et/ou de NaOH et/ou de KOH
et, le cas échéant, (i) au moins un support, lequel est choisi dans le groupe des dérivés hydroxy des hydrocarbures aliphatiques et alicycliques, saturés et insaturés (alcools), alcools monovalents ou de valence supérieure, glycols, diols, triols, polyols, alcools primaires, secondaires et tertiaires, méthanol, éthanol, propanol, butanol, siloxanes, silanes, silicones, huiles, huiles minérales, huiles synthétiques, huiles végétales, huiles animales, huile de térébenthine, hydrocarbures aliphatiques saturés ou insaturés, hydrocarbures cycliques saturés ou insaturés, hydrocarbures alicycliques, hydrocarbures aromatiques ou eau
et/ou (ii) au moins une matière d'ossature, laquelle est choisie dans le groupe des petits corps sphériques, sphères de verre ou sphères creuses en verre et/ou cendres d'électrofiltre et/ou cendres volantes provenant de centrales thermiques au lignite sous forme de sphères creuses de silicate d'aluminium présentant un point de fusion compris entre 1100 °C et 1400 °C
et/ou (iii) au moins un épaississant, lequel est choisi dans le groupe des bentonites, zéolithes, charges inertes, phyllosilicates, acides siliciques et silices ainsi que fibres inorganiques et organiques inertes, notamment par rapport à l'hydroxyde de calcium.

4. Combinaison selon l'une des revendications 1 à 3 caractérisée en ce que le constituant C dégageant des gaz comprend au moins un composé dégageant des gaz, lequel est choisi dans le groupe (NH₄)Cl, NH₄CH₃COO, (NH₄)₂CO₃, (NH₄)₃PO₄, (NH₄)₂SO₄, peroxydes, lesquels sont choisis parmi le groupe du bioxyde de sodium (Na₂O₂), peroxyde d'hydrogène (H₂O₂), perborate de sodium (NaBO₃·4 H₂O), sels du dioxyde de carbone (carbonates), carbonates alcalins, carbonates alcalino-terreux, soude, potasse, chaux, spaths, hydrogénocarbonates, hydrogénocarbonates de sodium (NaHCO₃), poudre fine d'aluminium et de magnésium
et, le cas échéant, (i) au moins un support, lequel est choisi dans le groupe des dérivés hydroxy des hydrocarbures aliphatiques et alicycliques, saturés et insaturés (alcools), alcools monovalents ou de valence supérieure, glycols, diols, triols, polyols, alcools primaires, secondaires et tertiaires, méthanol, éthanol, propanol, butanol, siloxanes, silanes, silicones, huiles, huiles minérales, huiles synthétiques, huiles végétales, huiles animales, huile de térébenthine, hydrocarbures aliphatiques saturés ou insaturés, hydrocarbures cycliques saturés ou insaturés, hydrocarbures alicycliques, hydrocarbures aromatiques ou eau
et/ou (ii) au moins un épaississant, lequel est choisi dans le groupe des bentonites, zéolithes, charges inertes, phyllosilicates, acides siliciques et silices ainsi que fibres inorganiques et organiques inertes, notamment par rapport à l'hydroxyde de calcium
et/ou (iii) au moins une matière d'ossature, laquelle est choisie dans le groupe des petits corps sphériques, sphères de verre ou sphères creuses en verre et/ou cendres d'électrofiltre et/ou cendres volantes provenant de centrales thermiques au lignite sous forme de sphères creuses de silicate d'aluminium présentant un point de fusion compris entre 1100 °C et 1400 °C.

5. Combinaison selon l'une des revendications 1 à 4 caractérisée en ce que 100 parties en poids du constituant (A) pétrifiant comprennent 35 à 90 parties en poids de matière solide dont la granulométrie est comprise entre 1 et 500 µm, 0 à 20 parties en poids du composé dégageant des gaz ou 10 à 75 parties en poids de support, 0 à 55 parties en poids de la matière d'ossature inerte et 0 à 20 parties en poids de l'épaississant.

6. Combinaison selon l'une des revendications 1 à 5 caractérisée en ce que 100 parties en poids du constituant (B) durcisseur comprennent 100 parties en poids d'eau ou contiennent 50 à 90 parties en poids de silicate alcalin en solution, de silicate d'aluminium en solution ou d'un mélange fluide, lequel comprend un mélange d'oxyde de SiO₂ et d'oxyde d'aluminium ainsi que de K₂O ou Na₂O, 0 à 20 parties en poids d'un agent stabilisant liquide et/ou solide, 10 à 70 parties en poids d'une matière d'ossature et 0 à 15 parties en poids d'un épaississant et/ou 0,5 à 60 parties en poids de NaOH et/ou KOH.

7. Combinaison selon l'une des revendications 1 à 6 caractérisée en ce qu'elle contient 0,5 à 5 parties en poids du constituant (A) pétrifiant par partie en poids du constituant (B) durcisseur.

8. Combinaison selon l'une des revendications 1 à 7 caractérisée en ce que 100 parties en poids du constituant (C) dégageant des gaz comprennent 0,5 à 60 parties en poids du composé dégageant des gaz, 20 à 70 parties en poids de support, 0 à 10 parties en poids d'épaississant et 0 à 75 parties en poids d'une matière d'ossature inerte.

9. Combinaison selon l'une des revendications 1 à 8 caractérisée en ce qu'elle contient 3 à 15 parties en poids du constituant (A) pétrifiant par partie en poids du constituant (C) dégageant des gaz.

10. Procédé avec utilisation d'une combinaison selon l'une des revendications 1 à 9 destiné à la fabrication d'un mélange mousseux pâteux, lequel peut être gonflé et durci pour obtenir un produit expansé solide et poreux, caractérisé en ce qu'il comprend les étapes suivantes:
a) Les constituants A et B définis ci-dessus ainsi que - dans la mesure où le composant A pétrifiant ne comprend pas de composé dégageant des gaz - le constituant C sont ajustés sur une viscosité comprise entre 20 et 150 Pa·s et fournis à l'utilisateur final conditionnés dans un ou plusieurs conteneurs;
b) Le contenu du ou des conteneurs n'est mélangé que sur les lieux d'utilisation à l'aide d'un mélangeur statique et introduit, sans gouttage et avec grande précision, dans un évidement à remplir et d'orientation le cas échéant verticale pour y subir en quelques minutes un moussage total et un durcissement complet sans apport de chaleur extérieure.

11. Procédé selon la revendication 10 caractérisé en ce que-les constituants A et B ainsi que - dans la mesure où le composant A pétrifiant ne comprend pas de composé dégageant des gaz - le constituant C sont mélangés les uns avec les autres dans un dispositif de mélange statique pourvu de deux ou trois chambres de cartouches, la section de mélange tubulaire commune étant suffisamment longue pour que le mélange mousseux, dès la sortie du tube du mélangeur statique, présente une consistance au moins quelque peu expansée, pâteuse et qui ne goutte pas et ce mélange mousseux étant amené dans un évidement pouvant être obturé et d'orientation le cas échéant verticale pour y subir de nouveau un moussage et durcissement.

12. Procédé selon l'une des revendications 10 ou 11 caractérisé en ce que les constituants (A) et (B) (pétrifiant et durcisseur) sont d'abord mélangés dans une section de prémélange du mélangeur statique ou présentés sous forme déjà mélangée et en ce qu'on ajoute ensuite dans un mélangeur statique le constituant (C) dégageant des gaz.

13. Produit expansé solide, poreux et inorganique caractérisé en ce qu'il peut être obtenu avec un procédé selon les revendications 10 à 12, qu'il présente une densité comprise entre 40 et 1000 kg/m³, une résistance à la pression réactive comprise entre 0,2 et 60 Nmm⁻² et un diamètre de pores moyen de l'ordre de 0,1 à 10 mm, qu'il possède une durée de résistance au feu satisfaisant à DIN 4102 partie 9, laquelle est supérieure à 180 minutes, et qu'il relève de la catégorie de matériaux de-construction A1 selon DIN 4102 partie 1 et des catégories de résistance au feu S 180 et R 120 de la norme DIN 4102 partie 11, le rapport entre le volume du produit expansé après gonflage et le volume, avant gonflage, du mélange contenant les constituants respectifs A, B et - dans la mesure où le composant A pétrifiant ne comprend pas de composé dégageant des gaz - le constituant C étant compris entre 1,01:1 et 10:1.
